(19) Europäisches Patentamt
European Patent Office
Office européen des brevets

(11) **EP 4 599 228 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **24834620.7**

(22) Anmeldetag: **13.12.2024**

(51) Internationale Patentklassifikation (IPC):
**G01N 21/17** [(2006.01)]    **G01N 29/24** [(2006.01)]

(52) Gemeinsame Patentklassifikation (CPC):
**G01N 21/1702; G01N 29/2425;** G01N 2021/1704

(86) Internationale Anmeldenummer:
**PCT/EP2024/086347**

(87) Internationale Veröffentlichungsnummer:
**WO 2025/132110 (26.06.2025 Gazette 2025/26)**

(54) **FOTOAKUSTISCHER GASSENSOR UND VERFAHREN**

PHOTO-ACOUSTIC GAS SENSOR AND METHOD

PROCÉDÉ ET CAPTEUR DE GAZ PHOTO-ACOUSTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.12.2023 CH 14502023**

(43) Veröffentlichungstag der Anmeldung:
**13.08.2025 Patentblatt 2025/33**

(73) Patentinhaber: **Sensirion AG**
**8712 Stäfa (CH)**

(72) Erfinder:
• **GIANELLA, Michele**
  **8634 Hombrechtikon (CH)**
• **THOMA, Antonio**
  **8046 Zurich (CH)**

(56) Entgegenhaltungen:
**EP-A1- 3 859 307    US-A1- 2020 300 756**

• **KUN LIU ET AL: "Trace gas detection based on off-beam quartz enhanced photoacousticspectroscopy: optimization and performance evaluation", 2010, pages 1 - 21, XP002608059, Retrieved from the Internet <URL:http://www.ece.rice.edu/lasersci/publications/Final%20MS%20submitted%20after%20revisions%20May%2016%202010.pdf> [retrieved on 20101103]**
• **MCNAGHTEN E D ET AL: "Simultaneous detection of trace gases using multiplexed tunable diode lasers and a photoacoustic cell containing a cantilever microphone", APPLIED PHYSICS B ; LASERS AND OPTICS, SPRINGER, BERLIN, DE, vol. 107, no. 3, 26 May 2012 (2012-05-26), pages 861 - 871, XP035071874, ISSN: 1432-0649, DOI: 10.1007/S00340-012-4980-2**

## Beschreibung

### Technisches Gebiet

Die Erfindung betrifft einen fotoakustischen Gassensor, ein Verfahren zur Bestimmung eines Messwerts mit einem fotoakustischen Gassensors und ein entsprechendes computerimplementiertes Verfahren.

### Stand der Technik

Fotoakustische Gassensoren nutzen die Wechselwirkung von elektromagnetischer Strahlung («Licht») mit Materie, um eine Konzentration eines Zielgases in einem Trägergas zu bestimmen. Moleküle des Zielgases absorbieren Lichtenergie, wenn die Lichtenergie einer Energiedifferenz in Rotations-/Vibrationszuständen der Moleküle entspricht. So angeregte Moleküle können die gewonnene Energie über Stösse mit benachbarten Molekülen im Trägergas verteilen: Es entsteht eine Druckschwankung, die sich mit Schallgeschwindigkeit fortpflanzt und z.B. mit einem Mikrofon gemessen werden kann. Je grösser die Anzahl Moleküle im Gas, die das Licht absorbieren können, desto grösser die Druckschwankung und demnach das Mikrofonsignal. Wird nun die Lichtintensität periodisch moduliert, dann wird auch das Mikrofonsignal entsprechend moduliert, und mit z.B. einer Lock-in-Demodulation des Mikrofonsignals kann eine offsetfreie Bestimmung der Zielgaskonzentration erfolgen. Druckschwankungen im Trägergas, bedingt durch Vibrationen oder Lärm, die zufällig dieselbe Periodizität aufweisen, können die Bestimmung beeinträchtigen.

Die EP3550286A1 beschreibt einen kleinen fotoakustischen Gassensor von einfachem Aufbau, wo eine Messzelle auf einem Substrat ein Messvolumen bildet, der trotzdem genaue Konzentrationswerte einer Gaskomponente liefert. Ein Mikrofon hat einen Bottom-Port, der Richtung Substrat zeigt und mit dem Messvolumen kommunikativ verbunden ist.

Die EP3859307A1 offenbart ein Verfahren zum Betrieb eines fotoakustischen Gassensors, wobei in einem ersten Schritt ein akustisches Referenzsignal in einer Messkammer aufgenommen wird, dieses Referenzsignal analysiert wird, um Lärminformation zu erhalten, und eine Filterfunktion basierend auf der Lärminformation angepasst wird, und dann in einem zweiten Schritt die Lichtintensität moduliert wird basierend auf der Filterfunktion und das akustische Messsignal analysiert wird basierend auf der Filterfunktion, um Information über das Zielgas in der Messkammer zu erhalten.

Die US2020/300756 A1 offenbart einen fotoakustischen Gassensor, wobei eine Lichtquelle mit einer Frequenz moduliert wird, die aufeinanderfolgende Werte einer Sequenz periodisch annimmt.

Es ist ein Ziel der Erfindung, einen einfachen fotoakustischen Gassensor und ein entsprechendes Messverfahren bereitzustellen, die robust sind gegenüber Störungen in der Form von Vibrationen oder Lärm und ohne Unterbruch Messdaten liefern können.

### Beschreibung der Erfindung

Vor diesem Hintergrund wird hier ein fotoakustischer Gassensor sowie ein Verfahren zur Bestimmung eines Messwerts mit einem fotoakustischen Gassensors und ein entsprechendes computerimplementiertes Verfahren vorgestellt gemäss den unabhängigen Ansprüchen 1, 5 und 6; ferner ein Computerprogramm nach Anspruch 7 und ein computerlesbares Speichermedium nach Anspruch 8.

Der fotoakustische Gassensor umfasst eine Messkammer zur Aufnahme eines Gases, eine Lichtquelle, angeordnet zur Ausstrahlung von Licht in die Messkammer, ein Mikrofon, angeordnet zur Detektion von Schallwellen in der Messkammer und angepasst zur Ausgabe eines entsprechenden Schallsignals und einen Lichtquellentreiber verbunden zur Bereitstellung eines Steuersignals für die Lichtquelle, gemäss dessen die Intensität des ausgestrahlten Lichts moduliert wird. Das Steuersignal treibt in einer Folge von Zeitfenstern die Lichtquelle in einem Zeitfenster der Folge mit einer periodischen Intensitätsmodulation einer Frequenz an, wobei die Frequenz der Intensitätsmodulation in einem Zeitfenster von der Frequenz der Intensitätsmodulation im darauffolgenden Zeitfenster verschieden ist, und wobei die so definierte Folge von Frequenzwerten periodisch ist mit einer Periode $n_f \geq 2$ .

Vibrationen und/oder akustischer Lärm, verursacht durch Motoren, Kompressoren oder andere rotierende oder oszillierende Geräte in der Nähe des fotoakustischen Sensors, können periodisch sein. Sie werden vom Mikrofon aufgenommen und als Störsignal dem fotoakustischen Nutzsignal überlagert. Wenn eine der Frequenzkomponenten des Störsignals nahe der Frequenz des fotoakustischen Nutzsignals liegt, kann dies zu einem Präzisionsverlust (Messung ist verrauscht) und/oder zu einem Genauigkeitsverlust (Messung ist möglicherweise nicht verrauscht aber gebiast) führen. Dies tritt auf, wenn der Frequenzunterschied $\Delta f$ zwischen dem Stör- und dem Nutzsignal klein ist. Klein in diesem Zusammenhang bedeutet, dass $\Delta f \ll \frac{1}{2\tau}$ , wobei $\tau$ die Integrationszeit ist (gesamte Zeitdauer, während der Daten gesampelt werden und aus der letztendlich ein Konzentrationswert bestimmt wird).

Betrachten wir ein fotoakustisches Signal $y_k$ mit Frequenz $f_{PA}$, Amplitude $a$, Phasenverschiebung $\Phi_{PA}$, gesampelt bei der Frequenz $f_s$:

$$y_k = a \cos\left(\frac{2\pi f_{PA} k}{f_s} + \phi_{PA}\right), \quad k = 0, 1, 2, \ldots$$

Nehmen wir an, dass das Verhältnis $\frac{f_s}{f_{PA}} = N$ eine natürliche Zahl ist (d.h. die akustische Periode ist ein ganzzahliges Vielfaches der Samplingperiode), und führen wir eine diskrete Fouriertransformation der Länge N aus:

$$Y_j^{(w)} = \sum_{k=wN}^{(w+1)N-1} y_k \exp\left(-\frac{2\pi i j k}{N}\right) = \begin{cases} \dfrac{Na}{2} e^{i\phi_{PA}} & j = 1 \\ \dfrac{Na}{2} e^{-i\phi_{PA}} & j = N-1 \\ 0 & \text{sonst} \end{cases}$$

wo w = 0, 1, 2, ... der Index des Fourierfensters ist. Der Wert des Fourierkoeffizienten ist unabhängig von w, weil sowohl $y_k$ als auch das komplexe Exponential in obiger Gleichung N-periodisch sind.

Die Dauer der Fouriertransformation ist $\frac{N}{f_s} = \frac{1}{f_{PA}}$ das fotoakustische Signal hat darum genau eine Periode innerhalb des Fourierfensters. Aus diesem Grund ist die Zielgrösse, nämlich die fotoakustische Amplitude $a$, ausschliesslich in den Fourierkoeffizienten $Y_1^{(w)}$ und $Y_{N-1}^{(w)}$ enthalten, die ein komplex konjugiertes Paar bilden, weil das fotoakustische Signal reellwertig ist. Diese beiden Fourierkoeffizienten entsprechen den Frequenzen $\pm f_{PA}$. Im Stand der Technik wird nur $Y_1^{(w)}$ berechnet, weil es alle Information über das fotoakustische Signal enthält. Natürlich kann das Fourierfenster auch länger gewählt werden. Eine Dauer gleich einem ganzzahligen Vielfachen von $N$ wird aber bevorzugt. Ist die Dauer gleich $qN$ ($q$ eine natürliche Zahl), dann befindet sich die Information bezüglich der Amplitude des fotoakustischen Signals auf den Fourierkoeffizienten $Y_q$ und $Y_{qN-q}$.

Betrachten wir nun dasselbe fotoakustische Signal wie zuvor, aber überlagert mit einem Störsignal der Amplitude b, Frequenz $f_{intf}$ und Phasenverschiebung $\phi_{intf}$. Das Gesamtsignal ist dann gegeben durch

$$y_k = a \cos\left(\frac{2\pi f_{PA} k}{f_s} + \phi_{PA}\right) + b \cos\left(\frac{2\pi f_{intf} k}{f_s} + \phi_{intf}\right).$$

Eine diskrete Fouriertransformation der Länge N ergibt

$$Y_j^{(w)} = \sum_{k=wN}^{(w+1)N-1} y_k \exp\left(-\frac{2\pi i j k}{N}\right) = \begin{cases} \dfrac{Na}{2} e^{i\phi_{PA}} + R_{intf}^{(w)} & j = 1 \\ \dfrac{Na}{2} e^{-i\phi_{PA}} + R_{intf}^{(w)*} & j = N-1 \\ \text{unabhängig von } a & \text{sonst} \end{cases}$$

wo $R_{intf}^{(w)}$ ein Term ist, der nur vom Störsignal abhängt und möglicherweise von einem Fourierfenster zum nächsten variiert. Die vorliegende Erfindung stellt ein Gerät und eine Methode bereit, die einerseits die Anwesenheit von störenden Signalen detektiert und andererseits den Einfluss solcher Störsignale auf die Konzentrationsmessung mildert.

Im Stand der Technik wird die Lichtquelle mit einer festen Frequenz moduliert, $f_{PA} = \frac{f_s}{N}$ (N eine natürliche Zahl); dies stellt sicher, dass die Amplitude des fotoakustischen Signals wie oben beschrieben nur auf den Fourier-Koeffizienten $Y_1^{(w)}$ und $Y_{N-1}^{(w)}$ liegt.

In der vorliegenden Erfindung wird die Frequenz des fotoakustischen Signals periodisch geändert und durchläuft $n_f \geq 2$ verschiedene Werte, wobei $n_f$ eine natürliche Zahl ist. Die Messzeit wird also in Zeitfenster aufgeteilt, hier Modulationsfenster genannt, wobei während jedes Modulationsfensters die Intensität der Lichtquelle mit einer festen Frequenz moduliert wird. Diese Modulationsfrequenz wechselt von einem Modulationsfenster zum nächsten in einer periodischen Weise: Der Folge der Modulationsfenster entspricht eine Folge von Modulationsfrequenzen, und diese Folge von Modulationsfrequenzen ist $n_f$-periodisch ($f_m = f_{m \bmod n_f}$). Die Intensität der Lichtquelle wird also mit einer Frequenz $f_0$ für eine bestimmte Dauer $D_0$, dann mit einer anderen Frequenz $f_1$ für eine Dauer $D_1$, und so weiter bis schliesslich mit der Frequenz $f_{n_f-1}$ für eine Dauer $D_{n_f-1}$ moduliert, und dann wieder mit der Frequenz $f_0$ und so weiter. Alle $D_m$ können gleich sein. Weiter ist es von Vorteil, wenn alle gewählten Frequenzen die Bedingung

$$f_m = \frac{f_s}{N_m} \ (m = 0, ..., n_f - 1)$$

erfüllen, wobei $N_m$ natürliche Zahlen sind (hier und im Folgenden sollte m im Subskript von $f$ und $N$ immer als m Modulo $n_f$ interpretiert werden). Dann liegt nämlich die Information über die Amplitude des fotoakustischen Signals mit Frequenz $f_m = \frac{f_s}{N_m}$ nur auf dem ersten (und letzten) Fourierkoeffizienten einer Fouriertransformation der Länge $N_m$. Die Modulationsfenster haben vorteilhaft eine Länge von mehreren Fourierfenstern, d.h. die Anzahl der Samples in einem Modulationsfenster ist viel grösser als die $N_m$ (d.h. das fotoakustische Signal hat mehrere Perioden innerhalb jedes Modulationsfensters). Es ist vorteilhaft, wenn die Dauer der Modulationsfenstern $D_m$ so gewählt wird, dass immer eine ganze Anzahl Perioden des zu messenden fotoakustischen Signals in das entsprechende Modulationsfenster passt, also $D_m = \frac{q_m}{f_m} \ (m = 0, ..., n_f - 1)$, wobei $q_m$ natürliche Zahlen sind. Es versteht sich von selbst, dass die Dauer der Modulationsfenster nicht konstant sein muss und dass die Modulationsfenster nicht unmittelbar aufeinander folgen müssen, z.B. um Energie zu sparen.

Es kann dann zum Beispiel pro Messperiode, definiert als Vereinigung von $n_f$ (Anzahl der Modulationsfrequenzen) aufeinanderfolgenden Modulationsfenstern, ein Messwert ausgegeben werden. Der Wechsel der Frequenzen macht wahrscheinlich, dass zumindest eine Frequenz pro Messperiode dabei ist, die nicht oder nicht erheblich vom Störsignal beeinträchtigt ist. Vorteilhafterweise ist die Messperiode kurz im Vergleich zur Zeitskala, auf der sich die Frequenznatur der Störung nicht wesentlich ändert.

In der Erfindung umfasst der fotoakustische Gassensor weiter einen Signalprozessor verbunden zur Aufnahme und Verarbeitung des Schallsignals und zur Bestimmung und Ausgabe eines Messwerts in einer Messperiode, definiert als $n_f$ aufeinanderfolgende Zeitfenster der Folge. Der Signalprozessor demoduliert das Schallsignal in jedem Zeitfenster der Messperiode mit der Frequenz des Steuersignals im Zeitfenster, um einen Nutzwert zu ermitteln, und mit der Frequenz des Steuersignals im darauffolgenden Zeitfenster, um einen Störwert zu ermitteln. Die Bestimmung des Messwerts berücksichtigt die Nutzwerte und die Störwerte.

Während jedes Modulationsfensters kann das Mikrofonsignal erstens bei der aktuellen fotoakustischen Frequenz und zweitens bei der fotoakustischen Frequenz des nächsten Modulationsfensters demoduliert werden, z.B. durch explizite Berechnung der obigen Summen für ausgewählte Fourierkoeffizienten oder alle Fourierkoeffizienten gleichzeitig mit einem geläufigen FFT-Algorithmus. Die erste Demodulation ergibt die Amplitude des fotoakustischen Signals (Nutzwert, wie im Stand der Technik), und die zweite Demodulation, der Störwert, ergibt die Störleistung bei der nächsten fotoakustischen Frequenz (hohe Störleistung bedeutet, dass ein störendes Signal bei dieser Frequenz vorhanden ist und mit der fotoakustischen Messung im nächsten Modulationsfenster interferieren wird). Wenn die Störleistung hoch ist, wird die im nächsten Modulationsfenster gemessene fotoakustische Amplitude ignoriert, da sie voraussichtlich verrauscht und/oder gebiast ist. In jeder Messperiode fallen also $2n_f$ Zwischenwerte an, nämlich $n_f$ Nutzwerte $\alpha_m$ (m = 0, ..., $n_f$ - 1) und $n_f$ vorausschauende Störwerte $\beta_m$ (m = 0, ..., $n_f$ - 1). Die $2n_f$ Zwischenwerte werden zu einem Messwert aggregiert, z.B.

$$\sum_{m=0}^{n_f-1} \alpha_m g(\beta_{m-1 \bmod n_f}),$$

wobei die Nutzwerte $\alpha$ pro Modulationsfenster mit Gewichtsfunktionen der Störwerte $\beta$ im vorangegangenen Modulationsfenster gewichtet werden. Die Gewichtsfunktionen sind monoton fallende Funktionen, z.B. Stufenfunktionen, die oberhalb einer gewissen Schwelle verschwinden. Dieses einfache Messschema hat unter anderem den Vorteil, dass eine lückenlose Gaskonzentrationsreihe ausgegeben werden kann, weil nicht auf eine akustische Referenzmessung und Analyse des Lärms gewartet werden muss, während derer kein Nutzsignal anfällt.

Im Modulationsfenster m, wenn das fotoakustische Signal mit der Frequenz $f_m$ moduliert wird, berechnen wir den ersten Fourier-Koeffizienten:

$$Y_1^{(m,w)}[f_m, f_m] = \sum_{k=wN_m}^{(w+1)N_m-1} y_k[f_m] \cdot \exp\left(-\frac{2\pi i k}{N_m}\right) = \frac{N_m a}{2} e^{i\phi_m} + R_{\text{intf}}^{(m,w)}[f_m],$$

der ein Mass gibt für die fotoakustische Amplitude $a$, der aber auch einen Beitrag von einem potenziellen Störterm $R_{\text{intf}}^{(m,w)}[f_m]$ enthält. Die Superskripte m und w in $Y_1$ bezeichnen das Modulationsfenster und das Fourierfenster im Modulationsfenster. Der erste Parameter in den eckigen Klammern ist die Modulationsfrequenz im Modulationsfenster und gehört deshalb zu $y_k[f_m]$,

$$y_k[f_m] = a \cos\left(\frac{2\pi f_m k}{f_s} + \phi_m\right) + b \cos\left(\frac{2\pi f_{\text{intf}} k}{f_s} + \phi_{\text{intf}}\right).$$

Der zweite Parameter in den eckigen Klammern bezeichnet die Demodulationsfrequenz, d.h. die Frequenz, der dieser Fourierkoeffizient entspricht und gehört zum komplexen Exponentialterm (zur Erinnerung: $N_m = f_s/f_m$),

$$\exp\left(-\frac{2\pi i k}{N_m}\right).$$

Diese Berechnung ist Stand der Technik. Zusätzlich berechnen wir jedoch auch den Fourierkoeffizienten, der der Frequenz $f_{m+1}$ entspricht (der Modulationsfrequenz der Lichtquelle im darauffolgenden Modulationsfenster), während die Modulationsfrequenz immer noch $f_m$ ist:

$$Y_1^{(m,w)}[f_m, f_{m+1}] = \sum_{k=wN_{m+1}}^{(w+1)N_{m+1}-1} y_k[f_m] \exp\left(-\frac{2\pi i k}{N_{m+1}}\right) = Q^{(m,w)}[f_m, f_{m+1}] + R_{\text{intf}}^{(m,w)}[f_{m+1}],$$

wo $Q^{(m,w)}[f_m, f_{m+1}]$ der Beitrag vom fotoakustischen Signal bei $f_m$ zur spektralen Amplitude gemessen bei $f_{m+1}$ (spektraler Leckeffekt) ist. Diese komplexe Grösse sollte sich ungefähr zu Null ausmitteln über das Modulationsfenster (unter der Annahme, dass $f_m$ und $f_{m+1}$ genug verschieden sind). Alternativ kann man die Dauer des Modulationsfenster auch so wählen, dass Q sich exakt ausmittelt. Dies ist zum Beispiel der Fall, wenn die Dauer des Modulationsfensters sowohl ein Vielfaches von $N_m$ wie auch von $N_{m+1}$ ist. Der Beitrag des Störterms $R_{\text{intf}}^{(m,w)}[f_{m+1}]$ könnte sich auch ausmitteln (zum Beispiel, wenn $f_{\text{intf}}$ genug verschieden von $f_m$ ist), aber da $f_{\text{intf}}$ im Allgemeinen unbekannt ist, ist das nicht gegeben. Darum gilt

$$\overline{Y_1^{(m)}}[f_m, f_{m+1}] \simeq \overline{R_{\text{intf}}^{(m)}}[f_{m+1}],$$

wo $\overline{\ldots} := M^{-1} \sum_{w=0}^{M-1} \ldots$ Mittelung über alle Fourierfenster w = 0, ... , M - 1 im Modulationsfenster bedeutet.

Im darauffolgenden Modulationsfenster, m + 1, hat das fotoakustische Signal eine Frequenz von $f_{m+1}$, und die Messung ist

$$Y_1^{(m+1,w)}[f_{m+1}, f_{m+1}]$$
$$= \sum_{k=wN_{m+1}}^{(w+1)N_{m+1}-1} y_k[f_{m+1}] \exp\left(-\frac{2\pi i k}{N_{m+1}}\right) = \frac{N_{m+1} a}{2} e^{i\phi_{m+1}} + R_{\text{intf}}^{(m+1,w)}[f_{m+1}].$$

Wenn wir annehmen, dass die Störung im Modulationsfenster $m + 1$ auch schon im vorangehenden Modulationsfenster m anwesend war, dann können wir für den Störterm abschätzen

$$\left|\overline{R_{\mathrm{intf}}^{(m+1)}[f_{m+1}]}\right|^2 \simeq \left|\overline{R_{\mathrm{intf}}^{(m)}[f_{m+1}]}\right|^2 \simeq \left|\overline{Y_1^{(m)}[f_m, f_{m+1}]}\right|^2 .$$

Wenn dieser Wert gross ist gegenüber der Leistung des reinen fotoakustischen Signals, dann können wir annehmen, dass die gegenwärtige Messung $\overline{Y_1^{(m)}}[f_{m+1}, f_{m+1}]$ erheblich gebiast ist und ignoriert werden sollte. Die obige Gleichheit gilt ohne Absolutbeträge meist nicht.

Sonst könnte man die Messung einfach korrigieren durch Subtraktion:
$$\overline{Y_1^{(m+1)}}[f_{m+1}, f_{m+1}] - \overline{Y_1^{(m)}}[f_m, f_{m+1}]$$

Wenn also der Störwert $\left|\overline{Y_1^{(m)}}[f_m, f_{m+1}]\right|^2$, d.h. die Demodulation im Modulationsfenster m mit Frequenz $f_{m+1}$ wo die fotoakustische Frequenz $f_m$ ist, einen gewissen Schwellwert überschreitet, dann wird der fotoakustische Nutzwert $\overline{Y_1^{(m+1)}}[f_{m+1}, f_{m+1}]$, d.h. die Demodulation im Modulationsfenster m + 1 mit Frequenz $f_{m+1}$ wo die fotoakustische Frequenz $f_{m+1}$ ist, ignoriert (oder fliesst mit kleinerem Gewicht in den Messwert der Messperiode ein).

In einer Ausführungsform der Erfindung kann die Aufnahme der Rohdaten, d.h. des Mikrofonsignals, und die Bestimmung der Nutzwerte, Störwerte und daraus des Messwerts, asynchron geschehen: Die Rohdaten können lokal auf einem Speichermedium gepuffert werden, z.B. auf einem Speicherchip, der Teil des Signalprozessors ist, und / oder in eine Cloud zur weiteren Datenverarbeitung gesendet werden. Die Bestimmung der Messwerte und letztendlich der Gaskonzentrationswerte kann dann in der Cloud geschehen, wo mehr Rechenleistung und / oder Rechenzeit zur Verfügung steht. Der Vorteil dieser Ausführungsform ist, dass der Signalprozessor desto einfacher und insbesondere günstiger gewählt werden kann, je kleiner die Anforderungen an seine Rechen- und Speicherleistung sind.

In einer nicht beanspruchten Ausführungsform umfasst der Fotoakustischer Gassensor eine Messkammer zur Aufnahme eines Gases, eine Lichtquelle, angeordnet zur Ausstrahlung von Licht in die Messkammer, ein Mikrofon, angeordnet zur Detektion von Schallwellen in der Messkammer und angepasst zur Ausgabe eines entsprechenden Schallsignals, einen Lichtquellentreiber verbunden zur Bereitstellung eines Steuersignals für die Lichtquelle, gemäss dessen die Intensität des ausgestrahlten Lichts moduliert wird und einen Signalprozessor verbunden zur Aufnahme und Verarbeitung des Schallsignals und zur Bestimmung und Ausgabe des Messwerts. Das Steuersignal treibt in einer Folge von Zeitfenstern die Lichtquelle in einem Zeitfenster der Folge mit einer periodischen Intensitätsmodulation einer Frequenz an, und der Signalprozessor demoduliert das Schallsignal in einem ersten Zeitfenster mit der Frequenz des Steuersignals im ersten Zeitfenster, um einen Nutzwert zu ermitteln, und mit einer zweiten Frequenz, die nicht gleich der ersten Frequenz ist, um einen Störwert zu ermitteln. Die Frequenz der Intensitätsmodulation in einem darauffolgenden zweiten Zeitfenster basiert auf dem Störwert, und die Bestimmung des Messwerts im ersten Zeitfenster berücksichtigt den Nutzwert.

Nachdem die Störmessung, d.h. die Demodulation bei Frequenz $f_{m+1}$ im Modulationsfenster m, insbesondere vor der fotoakustischen Messung bei Frequenz $f_{m+1}$ im Modulationsfenster m + 1 erfolgt, und, falls die Störgrösse einen bestimmten Schwellwert überschreitet, der Nutzwert bei Frequenz $f_{m+1}$ ignoriert wird, kann die Messung auch ganz weggelassen werden. In einer Ausführungsform kann man also im Modulationsfenster m das fotoakustische Nutzsignal $\overline{Y_1^{(m)}}[f_m, f_m]$ und die Störwerte $\left|\overline{Y_1^{(m)}}[f_m, f_i]\right|^2$ aller anderen Frequenzen $f_i$, $i \neq m$ berechnen (nicht nur von $f_{m+1}$), und dann die Modulationsfrequenz im darauffolgenden Modulationsfenster m + 1 auf diejenige Frequenz wechseln, die den kleinsten Störwert hat.

**Kurze Beschreibung der Zeichnungen**

Figur 1 zeigt den Einfluss von periodischen Störungen auf das Nutzsignal in Abhängigkeit der Störfrequenz auf.

Figur 2 zeigt Mittelwert und Varianz des gemittelten ersten Fourierkoeffizienten in Abhängigkeit der Differenz zwischen Anregefrequenz und Störfrequenz.

Figur 3 zeigt Messdatenreihen von einem fotoakustischen Gassensoren, der sequenziell bei drei verschiedenen Frequenzen betrieben wird.

Figur 4 zeigt einen Vergleich von der Bestimmung der Messwerte gemäss vorliegender Erfindung mit gleitenden Mittelwerten.

Figur 5 zeigt einen fotoakustischen Gassensor.

Figur 6 zeigt in schematischer Art und weise einen Zeitverlauf des Steuersignals der Lichtquelle.

## Wege zur Ausführung der Erfindung im Einzelnen

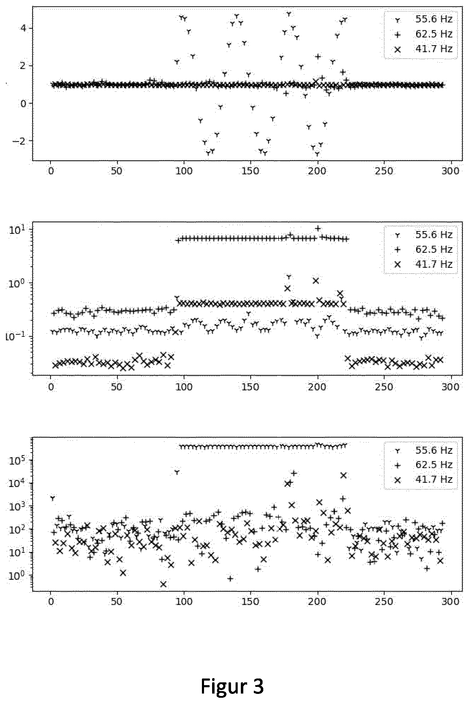

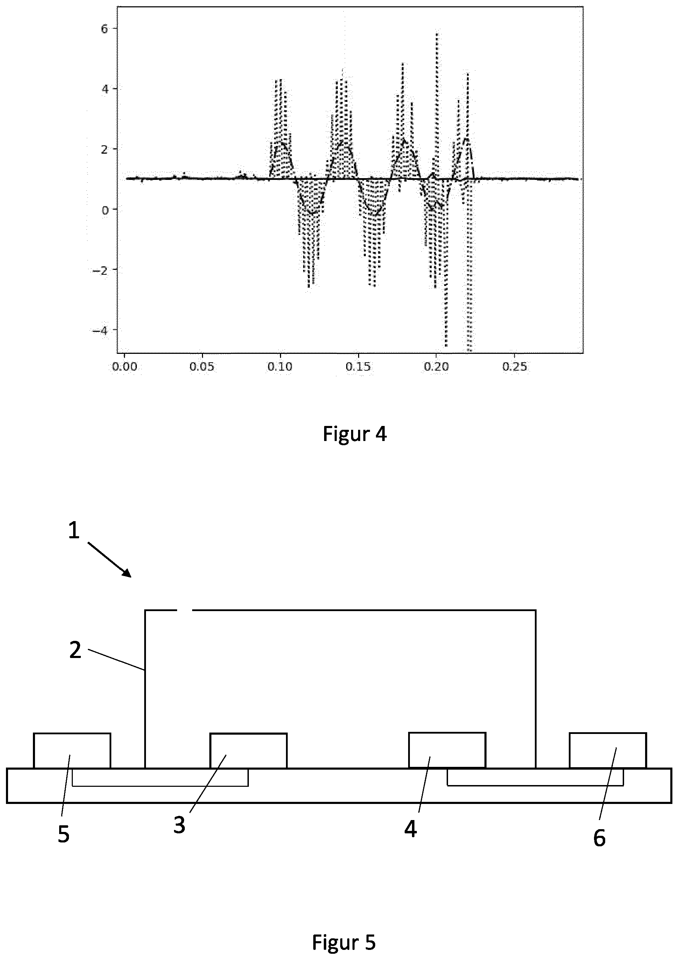

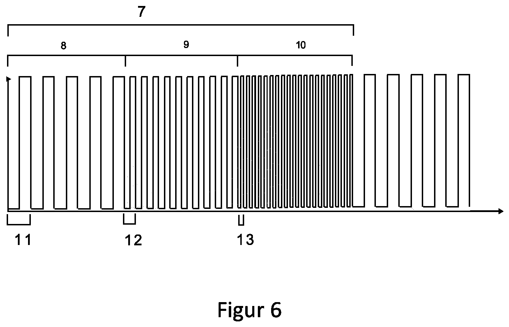

Messresultate eines konkreten Ausführungsbeispiels sind in den Figuren 3 und 4 gezeigt. Ein fotoakustischer $CO_2$-Gassensor 1 mit Messkammer 2, schematisch dargestellt in Figur 5, wird in Raumluft mit rund 400 ppm $CO_2$ betrieben. Ein Mikroprozessor 5 ist so konfiguriert, dass er die Lichtquelle 3 periodisch wechselnd jeweils 1 s lang bei Frequenzen von $f_0 = 41.7$ Hz, $f_1 = 55.6$ Hz und $f_2 = 62.5$ Hz antreibt. Die Lichtquelle 3 ist ein Heizer, d.h. Schwarzkörperstrahler, plus Frequenzfilter bei 4.3 um (hier liegt ein Absorptionsmaximum von $CO_2$, das gleichzeitig ein Absorptions-minium für $H_2O$ ist), der mittels Pulsdichtemodulation (100 kHz) der Betriebsspannung von 5 V Temperaturen bis 500°C erreichen kann. Das Steuersignal ist eine Rechteckschwingung mit 50% duty cycle bei den Frequenzen $f_m$, $m = 0, 1, 2$ zwischen zwei Werten, die die Solltemperaturen Raumtemperatur und ca. 500°C repräsentieren. Der zeitliche Verlauf des Steuersignals ist in Figur 6 dargestellt. Eine Messperiode 7 ist unterteilt in drei Modulationsfenster 8, 9 und 10. In jedem Modulationsfenster wiederum hat das Steuersignal eine entsprechende Modulationsperiode 11, 12 und 13. Wegen der nicht verschwindenden thermischen Masse des Heizers ist der resultierende zeitliche Verlauf der Ist-Temperatur des Heizers natürlich nur annäherungsweise eine Rechteckschwingung. Vom Zeitpunkt $t = 90$ s bis $t = 230$ s wird nun der Gassensor einer Vibration von 1 g Spitzen-Beschleunigung bei einer Frequenz von 55 Hz ausgesetzt. Im oberen Panel der Figur 3 ist die 1 s-Mittelung des Realteils der gemessenen Amplitude $\mathrm{Re}\,\overline{Y_1^{(m)}}[f_m, f_m]$ als Funktion der Zeit in Sekunden dargestellt, jeweils für die drei Frequenzen. Wir nehmen den Realteil, weil die Fouriertransformation so rotiert wurde, dass das Nutzsignal nur einen Realteil hat. Die Messwerte bei 55.6 Hz sind stark von der Störung betroffen und schwanken um den korrekten Wert (auf 1 normiert).

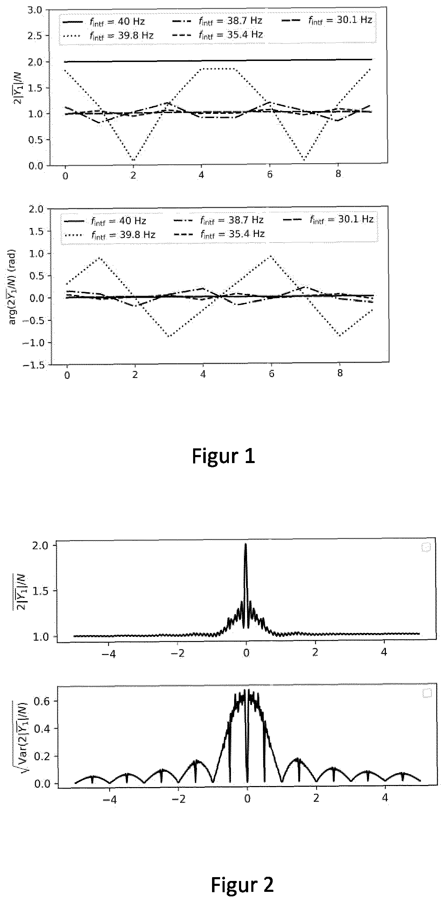

In Figur 1 sind Rechenbeispiele für den Einfluss von periodischen Störsignalen auf den Fourierkoeffizienten dargestellt. Die y-Achse zeigt im oberen Panel den Absolutwert der 1 s-Mittelung des ersten Fourierkoeffizienten $2|\overline{Y_1}|/N$, wo $\overline{Y_1} = \frac{1}{N_p}\sum_p Y_1^{(p)}$ und $N_p$ die Anzahl Fourierfenster der Länge N, die in 1 s passen, und im unteren Panel das Argument. Die x-Achse zeigt die Zeit in Sekunden. Die Parameter sind $a = b = 1$, $\phi_{\mathrm{PA}} = \phi_{\mathrm{intf}} = 0$, $f_{\mathrm{PA}} = 40$ Hz, $f_{\mathrm{s}} = 1$ kHz, N = 25 und fünf verschiedene Werte der Störfrequenz $f_{\mathrm{intf}}$. Wenn sich die Störfrequenz der fotoakustischen Frequenz annähert, beginnt der Absolutwert zu oszillieren mit zunehmender Amplitude und abnehmender Frequenz. Der Grund dafür ist, dass die beiden Signale zwischen konstruktiver und destruktiver Interferenz in den verschiedenen 1s-Fenstern wechseln. Wenn die Störfrequenz gleich der fotoakustischen Frequenz ist, interferieren die Signal vollkommen konstruktiv und der Absolutwert ist konstant aber gebiast bei 2.

Im mittleren Panel der Figur 3 ist die Standardabweichung des Realteils der gemessenen Amplitude, $\sigma(\mathrm{Re}\,Y_1^{(m)}[f_m, f_m])$, gezeigt. Auffällig ist, dass die Frequenz 55.6 Hz, die am meisten von der Vibration betroffen ist, die kleinste Standardabweichung aufweist. Der Grund dafür ist, dass während der 1 s-Periode das fotoakustische Signal und das vibrationsbedingte Störsignal kohärent sind. Die gemessene Amplitude ist daher annäherungsweise konstant aber gebiast.

In Figur 2 wird dieser Sachverhalt anhand des Rechenbeispiels von Figur 1 genauer erläutert. Das obere Panel von Figur 2 zeigt den Mittelwert und das untere Panel die Standardabweichung jeweils berechnet über 10 s von $2|\overline{Y_1}|/N$ als Funktion des Frequenzunterschieds zwischen der fotoakustischen Frequenz und der Störfrequenz. Bis zu einem Frequenzunterschied von etwa 1 Hz ist der Mittelwert ungefähr richtig (1 in diesem Rechenbeispiel). Für Frequenzunterschiede unter 1 Hz stellt die Integrationszeit von 1 s nicht genügend spektrale Auflösung bereit, um zwischen den Beiträgen des fotoakustischen und des Störsignals zu unterscheiden. Die Messung $2|\overline{Y_1}|/N$ enthält nicht verschwindende Beiträge von beiden Signalen. Die Standardabweichung nimmt grundsätzlich zu, wenn der Frequenzunterschied gegen Null geht. Wie oben bemerkt gibt es aber spezielle Frequenzunterschiede, wo die Standardabweichung verschwindet (Mittelwert ist konstant, aber gebiast).

Im unteren Panel der Figur 3 ist die Störleistung $\left|\overline{Y_1^{(m)}}[f_m, f_{m+1}]\right|^2$ dargestellt. Während des Intervalls, in dem der Gassensor der Vibration ausgesetzt ist, ist die Störleistung bei 55.6 Hz mehrere Grössenordnungen grösser als die Störleistung bei den anderen Frequenzen, was auf ein starkes Störsignal nahe 55.6 Hz hinweist. Bei der Bestimmung des Messwerts in der Messperiode, die 3 s dauert, könnte man den Nutzwert bei fotoakustischer Frequenz 55.6 Hz ignorieren oder weniger stark gewichten. Das Resultat verschiedener Gewichtungen ist in Figur 4 gezeigt. Die gepunktete Kurve zeigt die laufende 1 s-Mittelung wie im oberen Panel von Figur 3. Die gestrichelte Linie zeigt die laufende gewichtete Mittelung über 3 s mit gleichen Gewichten von 1/3 für die drei Frequenzen. Offenbar oszilliert dieser Messwert stark um den richtigen Wert von 1, solange die störende Vibration präsent ist. Die durchgezogene Linie zeigt die laufende gewichtete Mittelung über 3 s, wo das Gewicht für die Frequenz 55.6 Hz auf Null gesetzt wurde, sobald die Störleistung über dem Schwellwert von z.B. 25,000 liegt. Der Störeinfluss der Vibration ist kaum mehr erkennbar.

Liste der Referenzeichen

| | |
|---|---|
| 1 | Fotoakustischer Gassensor |
| 2 | Messkammer |
| 3 | Lichtquelle |
| 4 | Mikrofon |
| 5 | Lichtquellentreiber |
| 6 | Signalprozessor |
| 7 | Messperiode |
| 8-9 | Modulationsfenster |
| 10-12 | Modulationsperioden |

**Patentansprüche**

**1.** Fotoakustischer Gassensor (1), umfassend

eine Messkammer (2) zur Aufnahme eines Gases,
eine Lichtquelle (3), angeordnet zur Ausstrahlung von Licht in die Messkammer,
ein Mikrofon (4), angeordnet zur Detektion von Schallwellen in der Messkammer (2) und angepasst zur Ausgabe eines entsprechenden Schallsignals,
einen Lichtquellentreiber (5) verbunden zur Bereitstellung eines Steuersignals für die Lichtquelle (3), gemäss dessen die Intensität des ausgestrahlten Lichts moduliert wird,
wobei das Steuersignal in einer Folge von Zeitfenstern die Lichtquelle in einem Zeitfenster (8, 9, 10) der Folge mit einer periodischen Intensitätsmodulation einer Frequenz antreibt,
wobei die Frequenz der Intensitätsmodulation in einem Zeitfenster (8, 9, 10) von der Frequenz der Intensitätsmodulation im darauffolgenden Zeitfenster verschieden ist,
wobei die so definierte Folge von Frequenzwerten periodisch ist und $n_f$ verschiedene Werte durchläuft,
wobei $n_f$ eine natürliche Zahl grösser gleich zwei ist, und
einen Signalprozessor (6) verbunden zur Aufnahme und Verarbeitung des Schallsignals und zur Bestimmung und Ausgabe eines Messwerts in einer Messperiode (7), definiert als $n_f$ aufeinanderfolgende Zeitfenster (8, 9, 10) der Folge,
**dadurch gekennzeichnet, dass**
der Signalprozessor (6) das Schallsignal in jedem Zeitfenster (8, 9, 10) der Messperiode (7) mit der Frequenz des Steuersignals im Zeitfenster (8, 9, 10) demoduliert, um einen Nutzwert zu ermitteln, und mit der Frequenz des Steuersignals im darauffolgenden Zeitfenster demoduliert, um einen Störwert zu ermitteln, und dass die Bestimmung des Messwerts die Nutzwerte und die Störwerte berücksichtigt.

**2.** Fotoakustischer Gassensor nach Anspruch 1,
wobei der Messwert eine Funktion der Nutzwerte und Störwerte ist.

**3.** Fotoakustischer Gassensor nach Anspruch 2,
wobei der Messwert eine Linearkombination der Nutzwerte ist und wobei die Gewichte der Linearkombination monoton fallende Funktionen der Störwerte umfassen.

**4.** Vorrichtung nach Anspruch 1, 2 oder 3, wo der Unterschied zwischen zwei aufeinanderfolgenden Frequenzen der Frequenzfolge grösser als das Inverse der Dauer des Zeitfensters (8, 9, 10) ist, in welchem das Schallsignal mit den beiden Frequenzen demoduliert wird.

**5.** Verfahren zur Bestimmung eines Messwerts mit einem fotoakustischen Gassensor (1), umfassend

Bereitstellen einer Messkammer (2) zur Aufnahme eines Gases, einer Lichtquelle (3), angeordnet zur Ausstrahlung von Licht in die Messkammer (2) und eines Mikrofons (4), angeordnet zur Detektion von Schallwellen in der Messkammer (2) und angepasst zur Ausgabe eines entsprechenden Schallsignals,

Bereitstellen eines Lichtquellentreibers (5), verbunden zur Bereitstellung eines Steuersignals für die Lichtquelle (3), gemäss dessen die Intensität des ausgestrahlten Lichts moduliert wird,

Bereitstellen eines Signalprozessors (6), verbunden zur Aufnahme und Verarbeitung des Schallsignals und zur Bestimmung und Ausgabe des Messwerts,

Modulieren der Lichtintensität in einer Folge von Zeitfenstern (8, 9, 10) in einem Zeitfenster (8, 9, 10) der Folge mit einer periodischen Funktion einer Frequenz, wobei die Frequenz in einem Zeitfenster (8, 9, 10) von der Frequenz im darauffolgenden Zeitfenster verschieden ist, und wobei die so definierte Folge von Frequenzwerten periodisch ist und $n_f$ verschiedene Werte durchläuft,

wobei $n_f$ eine natürliche Zahl grösser gleich zwei ist,

**gekennzeichnet durch** die Schritte:

Demodulieren des Schallsignals in einem Modulationsfenster mit der Frequenz des Steuersignals im Modulationsfenster, um einen Nutzwert zu ermitteln, und mit der Frequenz des Steuersignals im darauffolgenden Modulationsfenster, um einen Störwert zu ermitteln,

Bestimmen des Messwerts in einer Messperiode (7), definiert als $n_f$ aufeinanderfolgende Modulationsfenster der Folge, unter Berücksichtigung der Nutzwerte und der Störwerte,

Ausgabe des Messwerts.

6. Computerimplementiertes Verfahren, umfassend die Schritte

Empfangen eines Schallsignals, das die Schallwellen in einer Messzelle (2) eines fotoakustischen Gassensors (1) repräsentiert, wo das Gas Licht mit einer Lichtintensitätsmodulation ausgesetzt war, wobei die Lichtintensitätsmodulation in einer Folge von Zeitfenstern in einem Zeitfenster (8, 9, 10) periodisch war mit einer Frequenz, wobei die Frequenz in einem Zeitfenster (8, 9, 10) verschieden war von der Frequenz im darauffolgenden Zeitfenster, und wobei die so definierte Folge von Frequenzwerten periodisch ist und $n_f$ verschiedene Werte durchläuft,

wobei $n_f$ eine natürliche Zahl grösser zwei ist,

Empfangen von Konfigurationsfrequenzen, die den Frequenzen der Frequenzfolge entsprechen,

Segmentieren des Schallsignals in Signalsegmente, die den Zeitfenstern entsprechen,

Demodulieren eines Signalsegments mit der Konfigurationsfrequenz im entsprechenden Zeitfenster, um einen Nutzwert zu ermitteln, und mit der Konfigurationsfrequenz entsprechend dem darauffolgenden Zeitfenster, um einen Störwert zu ermitteln,

Bestimmen eines Messwerts pro Messperiode (7), definiert als Signalsegmente von $n_f$ aufeinanderfolgenden Zeitfenstern der Folge, unter Berücksichtigung der Nutzwerte und der Störwerte.

7. Computerprogramm, umfassend Befehle, die bei der Ausführung des Programms durch einen Computer diesen veranlassen, das Verfahren nach Anspruch 6 auszuführen.

8. Computerlesbares Speichermedium, umfassend Befehle, die bei der Ausführung durch einen Computer diesen veranlassen, das Verfahren nach Anspruch 6 auszuführen.

**Claims**

1. Photoacoustic gas sensor (1), comprising

a measurement chamber (2) for receiving a gas,

a light source (3) arranged to emit light into the measurement chamber,

a microphone (4) arranged to detect acoustic waves in the measurement chamber (2) and adapted to output a corresponding acoustic signal,

a light-source driver (5) connected to provide a drive signal for the light source (3), according to which the intensity of the emitted light is modulated,

wherein the drive signal, in a sequence of time windows, drives the light source in a time window (8, 9, 10) of the sequence with a periodic intensity modulation at a frequency,

wherein the frequency of the intensity modulation in a time window (8, 9, 10) differs from the frequency of the intensity modulation in the subsequent time window,

wherein the sequence of frequency values thus defined is periodic and takes on $n_f$ different values,

wherein $n_f$ is a natural number greater than or equal to two, and

a signal processor (6) connected to receive and process the acoustic signal and to determine and output a measurement value in a measurement period (7), defined as $n_f$ successive time windows (8, 9, 10) of the sequence,

**characterized in that**

the signal processor (6) demodulates the acoustic signal in each time window (8, 9, 10) of the measurement period (7) with the frequency of the drive signal in the time window (8, 9, 10) to determine a useful value, and demodulates it with the frequency of the drive signal in the subsequent time window to determine an interference value, and

determining the measurement value takes into account the useful values and the interference values.

2. Photoacoustic gas sensor according to claim 1, wherein the measurement value is a function of the useful values and the interference values.

3. Photoacoustic gas sensor according to claim 2, wherein the measurement value is a linear combination of the useful values and wherein the weights of the linear combination comprise monotonically decreasing functions of the interference values.

4. Device according to claim 1, 2 or 3, wherein the difference between two successive frequencies of the frequency sequence is greater than the inverse of the duration of the time window (8, 9, 10) in which the acoustic signal is demodulated with the two frequencies.

5. Method for determining a measurement value with a photoacoustic gas sensor (1), comprising

providing a measurement chamber (2) for receiving a gas, a light source (3) arranged to emit light into the measurement chamber (2), and a microphone (4) arranged to detect acoustic waves in the measurement chamber (2) and adapted to output a corresponding acoustic signal, providing a light-source driver (5) connected to provide a drive signal for the light source (3), according to which the intensity of the emitted light is modulated, providing a signal processor (6) connected to receive and process the acoustic signal and to determine and output the measurement value,

modulating the light intensity, in a sequence of time windows (8, 9, 10), in a time window (8, 9, 10) of the sequence with a periodic function at a frequency, wherein the frequency in a time window (8, 9, 10) differs from the frequency in the subsequent time window, and wherein the sequence of frequency values thus defined is periodic and takes on $n_f$ different values,

wherein $n_f$ is a natural number greater than or equal to two,

**characterized by** the steps of:

demodulating the acoustic signal in a modulation window with the frequency of the drive signal in the modulation window to determine a useful value, and with the frequency of the drive signal in the subsequent modulation window to determine an interference value,

determining the measurement value in a measurement period (7), defined as $n_f$ successive modulation windows of the sequence, taking into account the useful values and the interference values,

outputting the measurement value.

6. Computer-implemented method comprising the steps of

receiving an acoustic signal representing the acoustic waves in a measurement cell (2) of a photoacoustic gas sensor (1), where the gas was exposed to light with a light-intensity modulation, wherein the light-intensity modulation in a sequence of time windows in a time window (8, 9, 10) was periodic at a frequency, wherein the frequency in a time window (8, 9, 10) differed from the frequency in the subsequent time window, and wherein the sequence of frequency values thus defined is periodic and takes on $n_f$ different values,

wherein $n_f$ is a natural number greater than two,

receiving configuration frequencies corresponding to the frequencies of the frequency sequence,

segmenting the acoustic signal into signal segments corresponding to the time windows, demodulating a signal segment with the configuration frequency in the corresponding time window to determine a useful value, and with the configuration frequency corresponding to the subsequent time window to determine an interference value,

determining a measurement value per measurement period (7), defined as signal segments of $n_f$ successive time windows of the sequence, taking into account the useful values and the interference values.

7. Computer program comprising instructions which, when the program is executed by a computer, cause the computer to perform the method according to claim 6.

8. Computer-readable storage medium comprising instructions which, when executed by a computer, cause the computer to perform the method according to claim 6.

**Revendications**

1. Capteur de gaz photoacoustique (1), comprenant

une chambre de mesure (2) destinée à recevoir un gaz,
une source lumineuse (3) agencée pour émettre de la lumière dans la chambre de mesure,
un microphone (4) agencé pour détecter des ondes acoustiques dans la chambre de mesure (2) et adapté pour délivrer un signal acoustique correspondant,
un dispositif de commande de source lumineuse (5) relié pour fournir un signal de commande à la source lumineuse (3), selon lequel l'intensité de la lumière émise est modulée,
dans lequel le signal de commande, dans une suite de fenêtres temporelles, commande la source lumineuse, dans une fenêtre temporelle (8, 9, 10) de la suite, avec une modulation périodique d'intensité à une fréquence, dans lequel la fréquence de la modulation d'intensité dans une fenêtre temporelle (8, 9, 10) est différente de la fréquence de la modulation d'intensité dans la fenêtre temporelle suivante, dans lequel la suite de valeurs de fréquence ainsi définie est périodique et prend $n_f$ valeurs différentes,
dans lequel $n_f$ est un nombre naturel supérieur ou égal à deux, et
un processeur de signal (6) relié pour recevoir et traiter le signal acoustique et pour déterminer et délivrer une valeur de mesure dans une période de mesure (7), définie comme $n_f$ fenêtres temporelles (8, 9, 10) successives de la suite,
**caractérisé en ce que**
le processeur de signal (6) démodule le signal acoustique, dans chaque fenêtre temporelle (8, 9, 10) de la période de mesure (7), avec la fréquence du signal de commande dans la fenêtre temporelle (8, 9, 10) afin de déterminer une valeur utile, et le démodule avec la fréquence du signal de commande dans la fenêtre temporelle suivante afin de déterminer une valeur de perturbation, et **en ce que**
la détermination de la valeur de mesure tient compte des valeurs utiles et des valeurs de perturbation.

2. Capteur de gaz photoacoustique selon la revendication 1, dans lequel la valeur de mesure est une fonction des valeurs utiles et des valeurs de perturbation.

3. Capteur de gaz photoacoustique selon la revendication 2, dans lequel la valeur de mesure est une combinaison linéaire des valeurs utiles et dans lequel les poids de la combinaison linéaire comprennent des fonctions monotones décroissantes des valeurs de perturbation.

4. Dispositif selon la revendication 1, 2 ou 3, dans lequel la différence entre deux fréquences successives de la suite de fréquences est supérieure à l'inverse de la durée de la fenêtre temporelle (8, 9, 10) dans laquelle le signal acoustique est démodulé avec les deux fréquences.

5. Procédé de détermination d'une valeur de mesure au moyen d'un capteur de gaz photoacoustique (1), comprenant

la mise à disposition d'une chambre de mesure (2) destinée à recevoir un gaz, d'une source lumineuse (3) agencée pour émettre de la lumière dans la chambre de mesure (2) et d'un microphone (4) agencé pour détecter des ondes acoustiques dans la chambre de mesure (2) et adapté pour délivrer un signal acoustique correspondant,
la mise à disposition d'un dispositif de commande de source lumineuse (5) relié pour fournir un signal de commande à la source lumineuse (3), selon lequel l'intensité de la lumière émise est modulée,
la mise à disposition d'un processeur de signal (6) relié pour recevoir et traiter le signal acoustique et pour déterminer et délivrer la valeur de mesure,
la modulation de l'intensité lumineuse, dans une suite de fenêtres temporelles (8, 9, 10), dans une fenêtre temporelle (8, 9, 10) de la suite, au moyen d'une fonction périodique à une fréquence, dans lequel la fréquence dans une fenêtre temporelle (8, 9, 10) est différente de la fréquence dans la fenêtre temporelle suivante, et dans lequel la suite de valeurs de fréquence ainsi définie est périodique et prend $n_f$ valeurs différentes,
dans lequel $n_f$ est un nombre naturel supérieur ou égal à deux,
**caractérisé par** les étapes suivantes :

démoduler le signal acoustique dans une fenêtre de modulation avec la fréquence du signal de commande dans la fenêtre de modulation afin de déterminer une valeur utile, et avec la fréquence du signal de commande dans la fenêtre de modulation suivante afin de déterminer une valeur de perturbation,
déterminer la valeur de mesure dans une période de mesure (7), définie comme $n_f$ fenêtres de modulation successives de la suite, en tenant compte des valeurs utiles et des valeurs de perturbation,
délivrer la valeur de mesure.

6. Procédé implémenté par ordinateur, comprenant les étapes de

recevoir un signal acoustique représentant les ondes acoustiques dans une cellule de mesure (2) d'un capteur de gaz photoacoustique (1), le gaz ayant été exposé à de la lumière avec une modulation d'intensité lumineuse, dans lequel la modulation d'intensité lumineuse, dans une suite de fenêtres temporelles, dans une fenêtre temporelle (8, 9, 10) était périodique à une fréquence, dans lequel la fréquence dans une fenêtre temporelle (8, 9, 10) était différente de la fréquence dans la fenêtre temporelle suivante, et dans lequel la suite de valeurs de fréquence ainsi définie est périodique et prend $n_f$ valeurs différentes,
dans lequel $n_f$ est un nombre naturel supérieur à deux,
recevoir des fréquences de configuration correspondant aux fréquences de la suite de fréquences,
segmenter le signal acoustique en segments de signal correspondant aux fenêtres temporelles, démoduler un segment de signal avec la fréquence de configuration dans la fenêtre temporelle correspondante afin de déterminer une valeur utile, et avec la fréquence de configuration correspondant à la fenêtre temporelle suivante afin de déterminer une valeur de perturbation, déterminer une valeur de mesure par période de mesure (7), définie comme des segments de signal de $n_f$ fenêtres temporelles successives de la suite, en tenant compte des valeurs utiles et des valeurs de perturbation.

7. Programme d'ordinateur, comprenant des instructions qui, lors de l'exécution du programme par un ordinateur, amènent celui-ci à exécuter le procédé selon la revendication 6.

8. Support de stockage lisible par ordinateur, comprenant des instructions qui, lors de l'exécution par un ordinateur, amènent celui-ci à exécuter le procédé selon la revendication 6.

## Figur 1

## Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3550286 A1
- EP 3859307 A1

- US 2020300756 A1